# EUROPÄISCHE PATENTANMELDUNG

(11) **EP 2 205 045 A1**
(43) Veröffentlichungstag der Anmeldung: **07.07.2010**
(21) Anmeldenummer: 09175475.4
(22) Anmeldetag: 10.11.2009
(51) Int. Cl.: H05B 37/02

(54) **Verfahren zum steuern des abstrahlverhaltens von leuchten in einer anordnung aus einer mehrzahl von leuchten sowie anordnung aus mehrzahl von leuchten**

(30) Priorität: 17.12.2008 DE 102008062674
(71) Anmelder: Osram Gesellschaft mit beschränkter Haftung, 81536 München (DE)
(72) Erfinder: Pabst, Wolfgang, 82041, Deisenhofen (DE)

(57) **Zusammenfassung**

In einer Anordnung von Leuchten (10) steuert eine erste Leuchte (12) die anderen Leuchten: Sie legt das Sollabstrahlverhalten fest, insbesondere aufgrund von Signalen von einer Uhr (30), einem Bewegungsmelder (32) und einem Dämmerungssensor (34), und übermittelt entsprechende Informationen über das von ihr im Betrieb ohnehin abgegebene Licht, indem dessen Intensität mit Frequenzen variiert wird, die vom menschlichen Auge nicht erfasst werden können. Es bedarf daher keiner gesonderten Signalleitungen oder gesonderter Sende- und Empfangsvorrichtungen außer den normalen Lichtquellen (26). Wenn die Leuchten (12, 14) und (16) zusätzlich noch mit eigenen Stromversorgungseinheiten (18) ausgestattet sind, ist eine Verkabelung gar nicht notwendig, und die Leuchten (12, 14) und (16) können ohne eine Verkabelung berücksichtigen zu müssen aufgestellt werden.

## Beschreibung

### Technisches Gebiet

Die Erfindung betrifft ein Verfahren zum Steuern des Abstrahlverhaltens von Leuchten in einer Anordnung aus einer Mehrzahl von Leuchten. Sie betrifft auch eine Anordnung aus einer Mehrzahl von Leuchten.

Es soll sich insbesondere um eine großräumige Verteilung einer Anzahl von Leuchten handeln, nämlich z. B. von Straßenleuchten, die eine nach der anderen entlang einer Straße angeordnet sind.

### Stand der Technik

Während lange Jahre Straßenleuchten an ein Stromversorgungsnetz angeschlossen waren und zentral gesteuert ein- und ausgeschaltet wurden wie z.B. in der Schrift DD 44788 (Wiegand), geht man zunehmend dazu über, die Ansteuerung von derartigen Straßenleuchten zu dezentralisieren. Straßenleuchten können z. B. straßenweise zu geschlossenen Systemen zusammengefasst sein. Solche System sind beispielsweise in den Schriften DE 102006058 (Sobottka) und US 4841278 (Tezuka) offenbart. Dort werden Funk- oder Infrarotsignale zu Informationsübermittlung verwendet. Das Abstrahlverhalten wird für jedes System einzeln festgelegt. Insbesondere in abgelegenen Gebieten ist es nicht notwendig, dass die Straßenleuchten in allen Straßen ständig leuchten. So kann es genügen, eine Hauptdurchgangsstraße zu beleuchten und von dieser abzweigende Straßen nur dann zu beleuchten, wenn sich menschliche Personen in der Straße bewegen.

Man ist auch dazu übergegangen, Straßenleuchten dezentral mit Strom zu versorgen. Insbesondere gibt es Straßenleuchten, die mit einem eigenen Solarmodul ausgestattet sind, wie es beispileweise in der Schrift US 6784357 (Wang) beschieben ist: Während des Tages wird mithilfe des Solarmoduls elektrische Energie gewonnen und in einer Batterie gespeichert. Wenn es dunkel wird, wird die Energie aus der Batterie genutzt, um die Straßenleuchte zum Leuchten zu bringen. Bei diesen Systemen ist es in besonderem Maße wünschenswert, nicht zu viel der in der Batterie gespeicherten Energie im Betrieb abzugeben, damit ein ausreichender Vorrat an Energie für den Fall zur Verfügung steht, dass einige Zeit lang schlechtes Wetter herrscht und keine neue elektrische Energie aus dem Sonnenlicht gewonnen werden kann.

Da Straßenleuchten, die mit einem Solarmodul ausgestattet sind, nicht mehr an eine von einer Zentrale versorgten Stromleitung angeschlossen werden müssen, wäre es wünschenswert, wenn auch auf Signalleitungen verzichtet werden könnte, über die die Straßenleuchten angesteuert werden. Dann könnten die Straßenleuchten von Leitungssystemen unabhängig aufgestellt werden.

Eine Aussenleuchte, die ihre Abstrahlcharakteristik selbsttätig auf Wetterverhältnisse einstellt ist in DE 202008004790 beschrieben.

In der Schrift EP 1860800 (Nakagawa) ist beschrieben, das von LED-Leuchten abgestrahlte Licht gleichzeitig auch zur Datenübertragung zu Verkehrsteilnehmern zu nutzen durch Beaufschlagen mit Signalen, wobei die Daten zwischen den Leuchten mit Hilfe von Sendern/Empfängern einer optischen Datenübetragung erfolgt.

### Darstellung der Erfindung

Die Aufgabe der vorliegenden Erfindung ist es, einen Weg aufzuzeigen, wie das Abstrahlverhalten von Leuchten in einer Anordnung aus einer Mehrzahl von Leuchten in unaufwendiger Weise gesteuert werden kann.

Diese Aufgabe wird durch ein Verfahren zum Steuern des Abstrahlverhaltens von Leuchten in einer Anordnung aus einer Mehrzahl von Leuchten mit den Schritten gemäß Patentanspruch 1 gelöst. Sie wird auch durch eine Anordnung aus einer Mehrzahl von Leuchten gemäß Patentanspruch 7 gelöst.

Das erfindungsgemäße Verfahren umfasst, dass eine erste der Leuchten das Sollabstrahlverhalten von sich selbst und zumindest einer weiteren Leuchte festlegt. Die erste Leuchte strahlt Licht ab, welches mit Signalen beaufschlagt ist, über die zumindest eine Information über das Sollabstrahlverhalten übermittelt wird. Das Beaufschlagen von Licht mit Signalen erfolgt typischerweise durch zeitliche Variation der Lichtintensität. Das Licht wird durch eine zweite Leuchte empfangen, und diese liest die zumindest eine Information aus den Signalen aus und strahlt Licht entsprechend zumindest einer Information aus den ausgelesenen Informationen ab.

Somit legt die erste Leuchte das Sollabstrahlverhalten zumindest einer zweiten Leuchte fest, und diese erhält entsprechende Anweisungen und setzt diese um. Es wird hierbei insbesondere auf gesonderte Signalleitungen verzichtet. Es muss nicht der Aufwand getrieben werden, geeignete Funkstrecken oder Infrarotstrecken zwischen den Leuchten bereitzustellen und die Leuchten jeweils mit Sender bzw. Empfänger hierzu auszustatten. Vielmehr wird die Lichtquelle selbst als Sender genutzt, der getriebene Aufwand ist daher besonders gering.

Bevorzugt kann die zweite Leuchte genauso Licht abstrahlen, das mit Signalen beaufschlagt ist. Über diese Signale kann sie ebenfalls eine Information übermitteln. Die Kommunikationsstrecke wird daher fortgesetzt.

Dies kann in eine weitere Richtung erfolgen oder zur ersten Leuchte zurück.

So kann durch die Signale im von der zweiten Leuchte abgestrahlten Licht zumindest eine Information über das Sollabstrahlverhalten an eine weitere (dritte) Leuchte übermittelt werden. Da die erste der Leuchten das Sollabstrahlverhalten festgelegt hat, ist diese Information bevorzugt aus den ausgelesenen Informationen ausgewählt. Es ist allerdings auch möglich, dass die zweite Leuchte mit Einrichtungen versehen ist, die eine Korrektur des von der ersten Leuchte festgelegten Sollabstrahlverhaltens durch die zweite Leuchte ermöglichen, so dass die weitergegebenen Informationen aufbereitete Informationen, allerdings auf Grundlage der ausgelesenen Informationen, sind.

Die zweite Leuchte kann auch eine Information über eine dem Abstrahlverhalten entsprechend dem Sollabstrahlverhalten entgegenstehende Tatsache an die erste Leuchte übermitteln. Beispielsweise kann es sein, dass die zweite Leuchte eine Fehlfunktion hat und dies an die erste Leuchte mitteilt. Es kann auch eine weitere Leuchte eine Fehlfunktion haben, und in Gegenrichtung zur Übermittlung der Information betreffend das Sollabstrahlverhalten kann diese Information über die Fehlfunktion der weiteren Leuchte an die erste Leuchte übermittelt werden.

Durch das erfindungsgemäße Verfahren wird das Abstrahlverhalten der Leuchten koordiniert. In den einzelnen Leuchten müssen daher keine Informationen mehr verarbeitet werden, aus denen das Sollabstrahlverhalten abgeleitet werden kann, sondern dies ist lediglich bei der ersten Leuchte nötig. Das Festlegen des Sollabstrahlverhaltens durch die erste Leuchte kann insbesondere in Abhängigkeit von einer Uhrzeit erfolgen: Eine geeignete Datenverarbeitungseinheit, z. B. ein Mikroprozessor in der ersten Leuchte kann eine Tabelle abgespeichert haben, in der festgelegt ist, an welchem Tag des Jahres zu welcher Uhrzeit die Leuchte eingeschaltet und zu welcher Uhrzeit die Leuchte ausgeschaltet werden soll. Alternativ kann die erste Leuchte auch die Lichtintensität in der Umgebung erfassen und hierzu mit einem geeigneten Dämmerungssensor ausgestattet sein. Es wird erfasst, wenn es in einem bestimmten Maße dunkel wird, und dann wird die Leuchte dazu veranlasst, einzuschalten. Die erfasste Lichtintensität kann auch in Kombination mit der Uhrzeit beim Festlegen berücksichtigt werden. So kann z. B. bei vorübergehender Dunkelheit während des Tages von einem Einschalten der Leuchte abgesehen werden oder abgewartet werden, ob eine solche Dunkelheit über eine vorbestimmte Zeitdauer andauert. Alternativ oder zusätzlich zur Uhrzeit und zur erfassten Lichtintensität können auch Signale eines Bewegungssensors beim Festlegen des Sollabstrahlverhaltens berücksichtigt werden. Dies ist insbesondere dann sinnvoll, wenn die erste Leuchte am Eingang zu einer Straße steht: Erfasst sie eine Bewegung, kann veranlasst werden, dass sämtliche Leuchten aus der Straße eingeschaltet werden. Die Leuchten müssen dann nicht ständig eingeschaltet sein, sondern können bedarfsweise zum Einschalten gebracht werden. Ein Passant oder ein Kraftfahrzeug verursacht ein Einschalten beim Betreten bzw. Einfahren in die jeweilige Straße.

Bevorzugt ist es für das menschliche Auge nicht erfassbar, dass durch das Licht der Leuchten Signale übermittelt werden. Das menschliche Auge kann Frequenzen über 100 Hz nicht mehr auflösen. Die Intensitätsänderung des Lichts orientiert sich hieran. Sie muss zwar nicht in festen Frequenzen erfolgen, die Zeitskalen, über die die Intensitätsänderung erfolgt, sollen jedoch Schwingungsdauern einer Schwingung mit einer Frequenz von mehr als 100 Hz entsprechen, bevorzugt mehr als 20 kHz sein. Beispielsweise sind als Lichtquellen LEDs einsetzbar, deren Intensität mit Frequenzen im MHz-Bereich variabel ist.

Bei der erfindungsgemäßen Anordnung ist eine erste Leuchte zum Abgeben von Licht, welches mit Signalen beaufschlagt ist, ausgelegt und eine zweite Leuchte zum Empfangen von solchem Licht, Auslesen von in den Signalen enthaltener Information und zum Abgeben von Licht entsprechend solcher Information ausgelegt.

Es sei darauf hingewiesen, dass im vorliegenden Fall mindestens zwei Leuchten Licht abgeben. Die Übermittlung von Signalen über Licht ist als solche bekannt. Nicht bekannt ist, dass gleichzeitig mit der Nutzung einer Lichtquelle für ihren eigenen Zweck, nämlich der Beleuchtung, diese als Signalquelle dient, und dass eine Kommunikation zu einer zweiten Lichtquelle hin bewirkt wird.

Bevorzugt ist eine der Leuchten sowohl zum Abgeben von Licht, welches mit Signalen beaufschlagt ist, ausgelegt, als auch zum Empfangen von solchem Licht, Auslesen von in den Signalen enthaltener Information und zum Abgeben von Licht entsprechend der Information ausgelegt. Es kann sich hierbei um eine weitere, also dritte Leuchte handeln. Die Leuchte mit diesen Eigenschaften kann jedoch auch die erste Leuchte oder die zweite Leuchte sein.

Die erste Leuchte umfasst bevorzugt eine Uhr, einen Dämmerungssensor und/oder einen Bewegungsmelder, und sie umfasst eine Datenverarbeitungseinrichtung, die zum Verarbeiten von von diesen Einheiten erzeugten Signalen dient, um Signale festzulegen, mit der das Licht beaufschlagt wird.

Die Leuchten, die zum Empfangen von mit Signalen beaufschlagtem Licht ausgelegt sind, weisen zu diesem Zweck typischerweise einen Lichtsensor auf. Dieser sollte so ausgerichtet sein, dass er Licht von zumindest einer anderen der Leuchten empfängt, insbesondere derjenigen Leuchte, von der Signale erwartet werden. Sind die Leuchten aus der Anordnung in einer Art Kette angeordnet, kann der Lichtsensor zur vorherigen Leuchte aus der Kette hin orientiert sein, die Lichtquelle kann aber in Richtung zur in der Kette nachfolgenden Leuchte hin orientiert sein. Damit eine Kommunikation in zwei Richtungen, z. B. zum Übermitteln von Störmeldungen an die erste Leuchte, möglich ist, kann allerdings auch vorgesehen sein, dass die Lichtquellen in Richtung zu zwei Leuchten hin, nämlich zu der in der Kette vorangehenden und der in der Kette nachfolgenden Leuchte hin, leuchten und die Lichtsensoren Licht von diesen beiden Leuchten empfangen können. Gegebenenfalls können allerdings zwei gesonderte Lichtsensoren vorgesehen werden.

Da bei der erfindungsgemäßen Anordnung keine Signalleitung erforderlich ist, die die Leuchten miteinander verbindet, ist es besonders sinnvoll, auch auf Stromleitungen zu verzichten. Zu diesem Zweck kann jede Leuchte eine Stromversorgungseinheit umfassen, welche den gesamten Strom für die Leuchte bereitstellt. Typischerweise wird als Stromversorgungseinheit ein Solarmodul verwendet, es sind auch andere Stromversorgungseinheiten möglich. Die Leuchten können dann von Erdleitungssystemen unabhängig aufgestellt werden, es gibt somit eine erhöhte Freiheit bei der Auswahl von Plätzen für die Leuchten.

Dadurch, dass die Leuchten über das von ihnen ohnehin abgegebene Licht miteinander kommunizieren, kann auf andere Arten von Sendern und zugehörigen Empfängern zum Senden bzw. Empfangen drahtlos übermittelter Signale verzichtet werden. Allenfalls kann eine Leuchte, insbesondere die erste Leuchte, über solche Sender oder Empfänger verfügen, allerdings nicht, um mit den anderen Leuchten zu kommunizieren, sondern um Signale von einer externen Steuereinheit zu empfangen. Solche Signale können dann durch die erste Leuchte verwendet werden, um das Sollabstrahlverhalten sämtlicher Leuchten festzulegen, gegebenenfalls zusätzlich in Abhängigkeit von Signalen von der Uhr, dem Dämmerungssensor und/oder dem Bewegungsmelder.

Eine Signalübertragung über das von den Leuchten abgestrahlte Licht ist besonders einfach ausführbar, wenn die Leuchten Leuchtdioden als Lichtquellen aufweisen, denn deren Lichtabstrahlung ist mit Frequenzen im Megahertzbereich modulierbar.

Es ist auch möglich die Erfindung auf flächig oder räumlich angeordnete Leuchten anzuwenden. Beispielsweise können in einer Beleuchtungsanlage für eine Halle oder einen Büroraum an der Decke Leuchten in Reihen und Spalten angeordnet sein. Von einer Master-Leuchte wird das mit Signalen beaufschlagte Licht an mehrere benachbarte Leuchten gesendet. Die benachbarten Leuchten, die als Slave-Leuchten bezeichnet werden können, stellen ihr Abstrahlverhalten entsprechend den empfangenen Signalen ein und modulieren wiederum ihr abgestrahltes Licht entsprechend den empfangenen Informationen. So kann eine gewünschte Veränderung des Abstrahlverhalten schnell über eine ganze Beleuchtungsanlage mit vielen Leuchten verbreitet werden. Vorteilhaft liegt die Master-Leuchte zentral, so dass sie in einer ersten Übertragung mindestens vier benachbarte Leuchten steuern kann. Die gewünschte Veränderung des Abstrahlverhalten setzt sich dann von der Mitte des beleuchteten Raumes beginnend bis zu dessen Rändern fort.

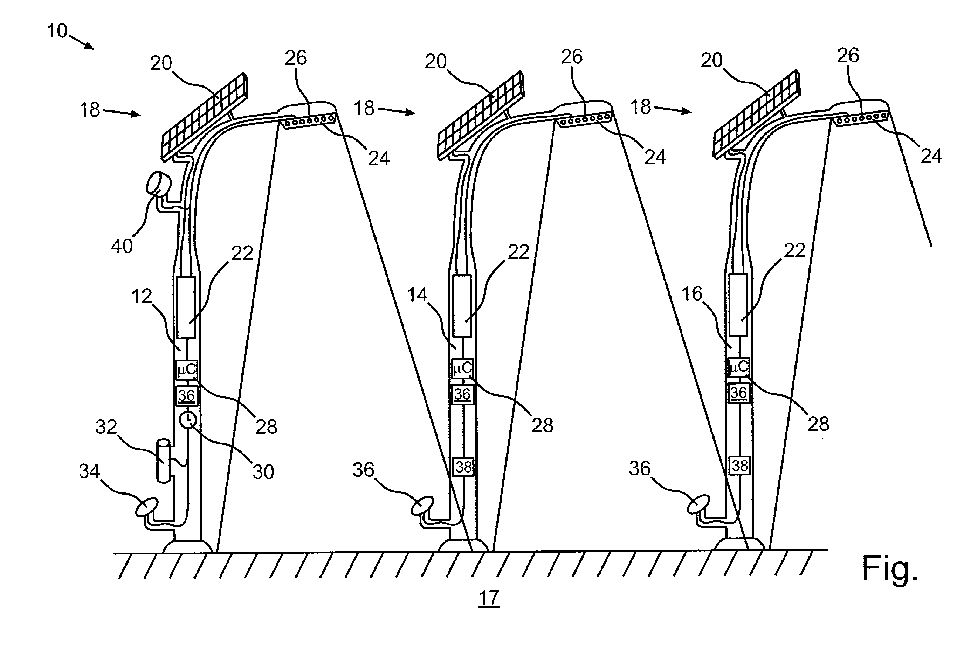

### Kurze Beschreibung der Zeichnung

Im Folgenden soll die Erfindung anhand eines Ausführungsbeispiels näher erläutert werden. Hierbei zeigt die einzige Figur eine erfindungsgemäße Anordnung aus einer Mehrzahl von Leuchten.

### Bevorzugte Ausführung der Erfindung

Die Figur zeigt eine im Ganzen mit 10 bezeichnete Anordnung aus Leuchten 12, 14 und 16.

Die Leuchten 12, 14 und 16 sind auf einem Grund 17 befestigt. Im Grund 17 verlaufen keine Kabel, weder Stromkabel, noch Signalleitungen. Die Stromversorgung der Leuchten 12, 14 und 16 erfolgt über Solarmodule 18, die aus einer Anordnung 20 von Solarzellen und einem daran gekoppelten Akkumulator 22 zum Speichern von elektrischer Energie besteht. Aus dem Akkumulator 22 wird die eigentliche Lichtquelle 24, die vorliegend aus einer Mehrzahl von Leuchtdioden 26 besteht, mit Strom versorgt. Jede der Leuchten 12, 14 und 16 weist einen Mikroprozessor 28 auf, der von dem Akkumulator 22 ebenfalls mit Strom versorgt wird.

Das Lichtabstrahlverhalten der Leuchten 12, 14 und 16 soll koordiniert erfolgen. Vorliegend wird es durch die erste Leuchte 12 festgelegt, insbesondere durch Einsatz eines im Mikroprozessor 28 der ersten Leuchte 12 ablaufenden Programms.

Der Mikroprozessor 28 ist mit einer Uhr 30 gekoppelt. Er ist auch mit einem Bewegungssensor 32 gekoppelt. Schließlich ist er auch mit einem lichtempfindlichen Sensor 34, der vorliegend als Dämmerungssensor ausgebildet sein soll, gekoppelt.

In einem dem Mikroprozessor 28 der ersten Leuchte zugeordneten Speicher 36 ist eine Tabelle abgelegt, bei welchen Uhrzeiten die Leuchten 12, 14 und 16 einzuschalten sind. Es kann auch vorgesehen sein, dass bei bestimmten Uhrzeiten eine Bereitschaft vorliegt, die Leuchten 12, 14 und 16 einzuschalten, dass es aber zum Veranlassen des tatsächlichen Einschaltens des Erfülltseins einer weiteren Bedingung bedarf. So kann z. B. in den späten Abendstunden eine Einschaltbereitschaft bestehen, und wenn der Dämmerungssensor 34 feststellt, dass bereits ein vorbestimmter Grad an Dunkelheit erreicht ist, weil z. B. der Himmel stark bewölkt ist, können die Leuchten 12, 14 und 16 tatsächlich zum Einschalten veranlasst werden. Genauso kann in den Nachtstunden vorgesehen sein, dass die Leuchten 12, 14 und 16 nicht eingeschaltet sind, dass aber bei Erfassen einer Bewegung durch den Bewegungssensor 32 die Leuchten 12, 14 und 16 aus der Anordnung 10 eingeschaltet werden.

Ein Einschalten erfolgt nun wie folgt: Der Mikroprozessor 28 der ersten Leuchte 12 bewirkt, dass die Lichtquelle 24 eingeschaltet wird. Zunächst kann der Mikroprozessor 28 ausschließlich die Lichtquelle 24 der ersten Leuchte 12 einschalten. Die Abgabe des Lichtes erfolgt aber mit hoher, durch das menschliche Auge nicht auflösbarer, Frequenz, vorliegend im Bereich von einigen Megahertz. Für den menschlichen Beobachter gibt die Leuchte 12 gleichmäßiges Licht ab, tatsächlich aber gibt es hochfrequente Intensitätsänderungen. Über diese Intensitätsänderungen werden Informationen übermittelt. Die zweite Leuchte 14 weist einen Lichtsensor 36 auf, der das von der ersten Leuchte 12 ausgehende Licht erfasst. Eine nachgeschaltete Auswerteeinheit 38 wertet die Signale im Licht aus. Diese Signale werden an einen Mikroprozessor 28 der Leuchte 14 weitergegeben, der die Lichtquelle 24 der Leuchte 14 ebenfalls zum Leuchten bringt. Dies erfolgt in Abhängigkeit von den ermittelten Informationen. Die Informationen können insbesondere auch die gesamte, zeitlich gemittelte Lichtintensität festlegen, die die Lichtquelle 24 der zweiten Leuchte 14 abgibt. Nun ist auch der Mikroprozessor 28 der zweiten Leuchte 14 so ausgelegt, dass er Informationen über das von der Lichtquelle 24 abgestrahlte Licht weitergeben lassen kann, also die Leuchtdioden 26 gepulst ansteuern kann. Es kann sich hierbei im einfachsten Fall um genau dieselben Informationen handeln, die von der ersten Leuchte 12 übermittelt wurden, der Mikroprozessor 28 der zweiten Leuchte 14 kann diese Informationen jedoch auch aufbereiten, z. B. aufgrund von Daten, die in einem ihm zugeordneten Speicher 36 abgelegt sind.

Schließlich gelangt das von der Lichtquelle 24 der zweiten Leuchte 14 abgestrahlte Licht zu einem Lichtsensor 36 der dritten Leuchte 16, und dort geschieht dasselbe wie in der zweiten Leuchte 14, es wird nämlich die Lichtquelle 24 zum Leuchten veranlasst.

Die Anordnung 10 kann insbesondere eine Kette bilden, von der die erste Leuchte 12 das erste Element ist. Das jeweils letzte Element der Kette muss nicht notwendigerweise Informationen weitergeben. Es sind auch verzweigte Strukturen denkbar, bei denen eine Leuchte, z. B. die erste Leuchte, Lichtsignale an gleich zwei weitere Leuchten abgibt. Genauso können auch jeweils zwei Leuchten koordiniert arbeiten: Z. B. können zwei Leuchten an einander gegenüberliegenden Seiten einer Straße angeordnet sein, und im weiteren Verlauf abermals zwei Leuchten an einander gegenüberliegenden Stellen. Ist die Straße in ihrem Verlauf dazwischen gekrümmt, ist nicht unbedingt festgelegt, von welcher aus dem ersten Paar der Leuchten das Licht zu welcher aus dem zweiten Paar der Leuchten gelangt. Daher können die Leuchten paarweise koordiniert das Signal weitergeben. Die Koordinierung muss nicht durch gesonderte Abstimmungssignale bewirkt werden, sondern kann durch das Vorbestimmtsein des zeitlichen Ablaufs automatisch erfolgen.

In der Figur gibt die jeweils weiter links liegende Leuchte Lichtsignale an die jeweils weiter rechts liegende Leuchte ab. Grundsätzlich können die Lichtkegel zweier benachbarter Leuchten einander überlappen, so dass es insbesondere auch möglich ist, dass die Signale in zwei entgegengesetzte Richtungen übermittelt werden. Lichtsensoren sind dann entsprechend anzuordnen. Beispielsweise kann in einer Kette aufgrund eines Defekts einer der Leuchten die Signalübertragung blockiert sein. Dann ist es sinnvoll, wenn die erste Leuchte durch Signale in Rückrichtung über den Ausfall einer der Leuchten informiert wird.

Die erste Leuchte 12 ist mit einer mit dem Mikroprozessor 28 gekoppelten Funksende- und empfängereinheit 40 versehen, die zur Kommunikation der ersten Leuchte mit einem in der Figur nicht gezeigten externen System dient. Über das externe System können Steuerbefehle an die erste Leuchte gegeben werden, die gegebenenfalls zusätzlich zu den Signalen von der Uhr, dem Bewegungsmelder 32 und dem Dämmerungssensor 34 bei der Abgabe von Licht und insbesondere von Lichtsignalen berücksichtigt wird. Umgekehrt können über die Sende- und Empfangseinheit 40 Informationen von der ersten Leuchte 12 an die Zentrale gesandt werden. Es ist grundsätzlich möglich, dass die erste Leuchte 12 auch über Kabel an eine Zentrale angeschlossen ist, wobei die Sende- und Empfangseinheit 40 dann entfallen kann. Ein Kabelanschluss ist dann allerdings für die weiteren Leuchten 14 und 16 nicht erforderlich.

Der lichtempfindliche Sensor 34 muss nicht oder nicht nur auf Licht im sichtbaren Bereich empfindlich sein, sondern kann auch zum Erfassen von Licht in den angrenzenden Frequenzbereichen (Infrarot, Ultraviolett) ausgelegt sein.

## Patentansprüche

1. Verfahren zum Steuern des Abstrahlverhaltens von Leuchten (12, 14, 16) in einer Anordnung (10) aus einer Mehrzahl von Leuchten (12, 14, 16), mit den Schritten:
- Festlegen des Sollabstrahlverhaltens zumindest von sich selbst und zumindest einer weiteren Leuchte durch eine erste Leuchte (12) der Leuchten,
- Abstrahlen von Licht durch die erste Leuchte (12), welches mit Signalen beaufschlagt ist, über die zumindest eine Information über das Sollabstrahlverhalten übermittel wird,
- Empfangen des Lichts durch zumindest eine zweite Leuchte (14), Auslesen der zumindest einen Information und Abstrahlen von Licht entsprechend der zumindest einen Information.

2. Verfahren nach Anspruch 1, bei dem die zweite Leuchte (14) Licht abstrahlt, das mit Signalen beaufschlagt ist, wobei über die Signale zumindest eine Information übermittelt wird.

3. Verfahren nach Anspruch 2, bei dem durch die Signale im von der zweiten Leuchte (14) abgestrahlten Licht zumindest eine Information über das Sollabstrahlverhalten an eine weitere Leuchte (16) übermittelt wird, wobei die zumindest eine an die weitere Leuchte (16) übermittelte Information bevorzugt in den ausgelesenen Informationen enthalten ist.

4. Verfahren nach Anspruch 2, bei dem durch die Signale im von der zweiten Leuchte (14) abgestrahlten Licht zumindest eine Information über eine einem Abstrahlverhalten entsprechend dem Sollabstrahlverhalten entgegenstehende Tatsache an die erste Leuchte (12) übermittelt wird.

5. Verfahren nach einem der vorhergehenden Ansprüche, bei dem das Festlegen des Sollabstrahlverhaltens in Abhängigkeit von einer Uhrzeit und/oder von einer durch die erste Leuchte (12) erfassten Lichtintensität in deren Umgebung und/oder von Signalen eines Bewegungssensors (32) und/oder von extern empfangenen Signalen erfolgt.

6. Verfahren nach einem der vorhergehenden Ansprüche, bei dem die Signale durch zeitlich variable Intensitätsänderung des Lichts in durch Frequenzen von mehr als 100 Hz und bevorzugt von mehr als 20 kHz definierten Zeitskalen erfolgen.

7. Verfahren nach einem der vorigen Ansprüche, mit folgendem Verfahrensschritt:
Empfangen des Lichts durch mehrere benachbarte Leuchten (14), Auslesen der zumindest einen Information und Abstrahlen von Licht entsprechend der zumindest einen Information.

8. Anordnung (10) aus einer Mehrzahl von Leuchten (12, 14, 16), wobei eine erste Leuchte (12) ausgelegt ist, das Sollabstrahverhalten zumindest von sich selbst und einer weiteren Leuchte festzulegen und Licht abzugeben, welches mit Signalen beaufschlagt ist über die zumindest eine Information über das Sollabstrahlverhalten übermittelbar ist und wobei eine zweite Leuchte (14) ausgelegt ist zum Empfangen von solchem Licht, Auslesen von in den Signalen enthaltener Information und zum Abgeben von Licht entsprechend solcher Information.

9. Anordnung (10) nach Anspruch 8, bei dem eine Leuchte (14, 16) sowohl zum Abgeben von Licht, welches mit Signalen beaufschlagt ist, ausgelegt ist, als auch zum Empfangen von solchem Licht, Auslesen von in den Signalen enthaltener Information und zum Abgeben von Licht entsprechend solcher Information ausgelegt ist.

10. Anordnung (10) nach Anspruch 8 oder 9, bei dem die erste Leuchte (12) eine Uhr (30) und/oder einen Dämmerungssensor (34) und/oder einen Bewegungsmelder (32) und/oder einen Sender und/oder Empfänger (40) umfasst, und bei dem die erste Leuchte (12) eine Datenverarbeitungseinheit zum Verarbeiten von von diesen Einheiten (30, 32, 34) erzeugten Signalen umfasst, um die Signale festzulegen, mit denen das Licht beaufschlagt wird.

11. Anordnung (10) nach einem der Ansprüche 8 bis 10, bei dem die zweite Leuchte (14) und gegebenenfalls eine weitere Leuchte (16) einen Lichtsensor (36) umfasst, der so ausgerichtet ist, dass er Licht von einer anderen (12, 14) der Leuchten empfängt.

12. Anordnung (10) nach einem der Ansprüche 8 bis 11, bei dem zumindest ein Teil der Leuchten und bevorzugt jede Leuchte ausschließlich Strom von einer zur Leuchte gehörenden Stromversorgungseinheit (18), insbesondere einem Solarmodul (18) bezieht.

13. Anordnung nach einem der Ansprüche 8 bis 12, bei dem höchstens eine Leuchte (12) einen Sender (40) zum Senden und/oder einen Empfänger (40) zum Empfangen von von Lichtsignalen verschiedenen drahtlos übermittelten Signalen hat.

14. Anordnung (10) nach einem der Ansprüche 8 bis 13, bei dem die Leuchten Leuchtdioden (26) als Lichtquellen aufweisen.

15. Anordnung (10) nach einem der Ansprüche 8 bis 14, bei dem die Leuchten flächig oder räumlich zueinander angeordnet sind und und wobei mindestens zwei benachbarte Leuchten ausgelegt sind zum Empfangen von mit Signalen beaufschlagtem Licht und zum Auslesen von in den Signalen enthaltener Information und zum Abgeben von Licht entsprechend solcher Information.
